# EUROPEAN PATENT SPECIFICATION

(11) **EP 0 625 258 B1**
(45) Date of publication and mention of the grant of the patent: **19.03.1997**
(21) Application number: 93903743.8
(22) Date of filing: 05.02.1993
(51) Int. Cl.: F42B 12/74

(54) **FRANGIBLE PRACTICE AMMUNITION**
ZERBRECHLICHES ÜBUNGSMUNITION
MUNITION FRAGILE D'EXERCICE

(30) Priority: 07.02.1992 US 831263
(43) Date of publication of application: 23.11.1994
(73) Proprietor: SNC INDUSTRIAL TECHNOLOGIES INC./ LES TECHNOLOGIES INDUSTRIELLES SNC INC., Le Gardeur, Quebec J5Z 2P4 (CA)
(72) Inventor: BELANGER, Germain 406 Tessier P.O. Box 610, Québec J0C 1K0 (CA); POTVIN, Marc, Val Bélair, Québec G3K 1Y4 (CA)
(74) Representative: Fort, Jacques
(86) International application number: PCT/CA93/00043
(87) International publication number: WO 93/16349

(56) References cited:
- EP-A- 0 096 617
- WO-A-88/09476
- DE-U- 9 011 456
- FR-A- 853 026
- GB-A- 1 175 274
- GB-A- 2 092 274
- US-A- 2 409 307
- US-A- 2 995 090

## Description

### FIELD OF THE INVENTION

The present invention relates to a frangible practice ammunition or bullet for use in shooting galleries and the like, and to a manufacturing method for such a bullet.

### BACKGROUND OF THE INVENTION

Lead gallery bullets are well known; they are characterized by the use of powders of lead consolidated into a bullet having sufficient strength for use and intended to be disrupted into small fragments on impact with a gallery target.

The costs associated with the training of users of such ammunitions are extremely high. First, in a shooting gallery, an expensive device, called "bullet trap", is required to stop the projectile to prevent fragments from injuring shooters. Furthermore, the walls of the shooting galleries must be covered with "ballistic rubber" in order to stop occasional fragments of the projectile.

There is also lead contamination which bears a heavy burden in the cost associated with training with standard ammunitions. During a shooting session, there is an emission of lead dust into the atmosphere. Also, the accumulation of projectiles in shooting galleries causes an environmental problem. Many shooting galleries have been closed recently due to the high level of lead in these installations.

The problem is replacing lead for the purpose of a gallery shooting round is to find a materiel sufficiently heavy that the automatic weapons will be able to cycle and the shooter will see few differences. Costly, abrasive or toxic heavy metals should be avoided while a cheap production process is required to keep production costs low.

The main criteria for the ability of a round to cycle autoloader weapons is the amount of energy that it delivers to the cycling mechanism. For some type of weapons, this energy is delivered by the expanding gases pushing back the cartridge case. This type may be found with the 9 mm Browning Hi-Power pistol for example. For some others, high pressure gases are connected through a port pressure inside the barrel. The high pressured gases are then the source of energy for the cycling mechanism. This type is found in most 5.56 NATO nominated weapons, like the Colt M16.

Weapons and propellant powders are designed to work with a projectile of a certain mass that gives a typical pressure-vs-time curve. Using a lighter projectile will cause problems, the main one being too low an energy transfer to give the feeding mechanism the needed momentum to cycle, in certain type of weapons.

In order to replace lead in a projectile, the selected material should have a minimum weight so that the resulting projectile mass is compatible with commercially available propellants for that calibre. This is important since it would not be economically viable to develop a lead-free round where a special propellant or other component would need to be developed.

It has been found that, with 5.56 mm autoloader weapons, the minimum density for a lead replacement material that would allow reliable cycling of most of these weapons would be 5.7 g/cm³. This density makes it possible to reach the same port pressure as with standard rounds, using the same propellants, but with a higher charge.

Training bullets including plastics material, either encapsulating or filled with metal powders, have been proposed to meet this problem.

European patent number 0,096,617, issued to Société Française de Munitions, describes a training bullet having a mixture of nylon, a powder of a ductile metal and a solid lubricant. This patent describes practice ammunitions wherein the density of the compound is between 3 and 5 g/cm³.

International patent application PCT 88-09476 which is considered to be the closest prior art, describes a bullet comprising a matrix of plastics material having a water absorption factor similar to or greater than that of nylon 66 containing a filler material effective to raise the density of the bullet from 3 to 7 g/cm³. However, when copper is used, its content by weight is limited to 88%; whenever a higher percentage of metal powder is desired, copper must be mixed with another metal filler, such as tungsten (46.5% by weight) which is, however, abrasive.

### OBJECTS AND STATEMENT OF THE INVENTION

It is an object of the present invention to provide a lead-free non-abrasive low cost replacement material for presently used frangible practice ammunitions. This has been achieved by using a compacted mixture of fine copper powder and of a thermoplastic resin.

Lead having a density of 11.3 g/cm³, it is evident that the density cannot be matched with equivalent metals available at an affordable cost (except gold, silver, mercury). The expensive metals (bismuth, nickel and tungsten) which all have advantages and disadvantages are possible. However, the choice of copper is the most economic approach to generate a replacement material to lead with added value, such as less toxicity or polluant.

It has been found that metals lighter than copper are not suitable since they are too light to reach the above-mentioned required density of 5.7 g/cm³ while metals heavier than copper are considered either as having high toxicity and abrasive effect or being simply too expensive for the task.

To meet the needed minimum specific gravity of 5.7 g/cm³, it has been found that the proportion of copper in the mixture ought to be over 90%, preferably in the neighborhood 92 to 93% by weight.

To arrive at a compacted mixture lead free, non abrasive, which would contain about 92% by weight of fine copper powder and which would have a specific gravity of 5.7 for ammunition applications, it has also been found that a thermoplastic molding resin which will enable to obtain these characteristics is nylon 11, or nylon 12.

A compacted mixture of copper and nylon wherein copper is at least 92% by weight can best be achieved by injection molding.

One characteristic of a lead-free training round is that it breaks up into small particles when hitting a hard surface, like a steel plate. Each of these particles is then too light to carry enough energy to be considered as a dangerous projectile. With the 5.56 mm, if the projectile hits an armoured steel plate with an incidence angle of 90° and a velocity of 2,000 feet per second, particles that should splash back will not perforate a sheet of newsprint grade of paper placed one meter from the steel plate. On the other hand, such projectile should be sufficiently impact resistant to stand the high accelerations that occur on firing, plus the deformations that result from weapon rifling.

In addition to the above requirement, a nylon-copper compound as a lead replacement material should meet the following mechanical properties. The Izod Impact should be between 120 J/m and 140 J/m and the percentage of elongation before breaking should be at least 1.7%. Should the Izod impact be too low, the projectile will break up on firing. If it is too high, the minimum angle of incidence at which the projectile will break up and not ricochet on hitting a target will be too large. If the percentage of elongation before breaking is too low, the projectile will break up when deformed by the rifling of the weapon.

Again, in order to meet these mechanical properties using only copper as a filler, it has been found that its content, by weight, should preferably remain between 92.5% and 93.5%. Sample projectiles made at 95% of copper by weight have been found to give poor accuracy in 9 mm because of small particles detaching from the projectile, unstabilizing it; with 5.56 mm, the projectile will be completely broken when leaving the barrel. 95% copper could be used with 9 mm if the velocity is lowered to a point it can resist the firing stresses, but then cycling of the weapons becomes erratic because of lack of energy.

It has been found that, in order to have good accuracy, the projectile diameter should be oversized by (.001 inch to .002 inch) 25 to 51 µm, compared to a standard projectile. This larger diameter is needed in order to make the projectile to shape completely into the grooves of the barrel. If it is not so shaped, there results an under-spined projectile which is not stable.

Dimensional control must therefore be very strict for the projectile diameter. Maximum allowable variation is set to ± 25 µm (±0.001 inch). Higher diameter will result in breaking projectiles on 5.56 mm, while lower diameter will lead to poor accuracy.

Another reason for a strict control of projectile diameter is the bullet pull effort. Projectiles made with the materials of the present invention are very strong longitudinally but could be weak radially. The standard method of crimping the projectile with the case mouth is not recommended since it results in a stress concentration at the point where the projectile is crimped. A tendency for projectiles crimped in such a way is to break in two at the exact crimping point. To avoid this, the inventors have developed, for a 5.56 mm round, a new cartridge case with a ball size smaller by (.003 inch) about 76 µm when compared to a standard NATO 5.56 mm case. The interference fit resulting from pushing the bullet into that smaller mouth is enough to give a stable (40 pounds) about 18,2 kg bullet pull effort without any stress concentration that would make the projectile weak at any point.

The effect of humidity on projectile diameter is a concern since nylon is used as a matrix for the compound. However, the diameter variation recorded when conditioning projectiles between 0% and 100% relative humidity is neglectable with that high level of copper filler. On 9 mm for example, projectile diameter changed by less than (.0002 inch) about 5 µm between these two extreme conditions.

Another important dimensional criteria is the volume of the projectile which should be optimized in order to obtain the heaviest projectile possible. The inventors have worked with the ogive and the overall length of the projectile in order to push the weight of the 5.56 mm projectile up to (36 grains) 2,33 g. The gyroscopic stability factor of this projectile is 1.25. Trying to get a better gyroscopic stability factor means compromising on weight. With this stability factor and a weight of (36 grains) 2,33 g, an optimal design has been reached.

On 9 mm which is inherently more stable than 5.56 mm (with a gyroscopic stability factor higher than 3), the limitation in weight is governed by the limitation in length for the projectile. With that calibre, increasing the length of the projectile will result in less room for the propellant in the case. A fine balance should then be reached between the projectile length and the propellant charge and bulk density. With the present invention, a projectile .675 inch long has been found to be adequately satisfactory for a 9mm calibre. A longer projectile results in a lower charge of propellant which, in returns, leads to a low energy round giving erratic cycling with some pistols. Shorter projectiles would also mean lighter projectiles that would give too different a pressure-vs-time curve and cycling problems will arise with longer barrelled weapons, like the Heckler & Koch MP-5. Hence, with the 9 mm calibre, the inventors have been able to push the weight up to (85 grains) 5,5 g.

### IN THE DRAWINGS

Figures 1a, 1b and 1c are graphs and tables illustrating the relationship between copper and the specific gravity;
Figures 2 and 3 are graphs illustrating the relationship of copper content to the flexural modulus and Izod impact;

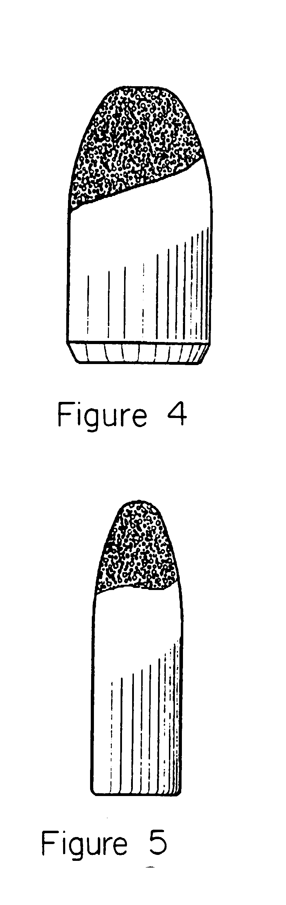

Figure 4 is a partly cross-sectional elevation of 9mm caliber made in accordance with the present invention; and
Figure 5 is a partly cross-sectional elevation of 5.56mm caliber made in accordance with the present invention.

### DESCRIPTION OF PREFERRED EMBODIMENTS

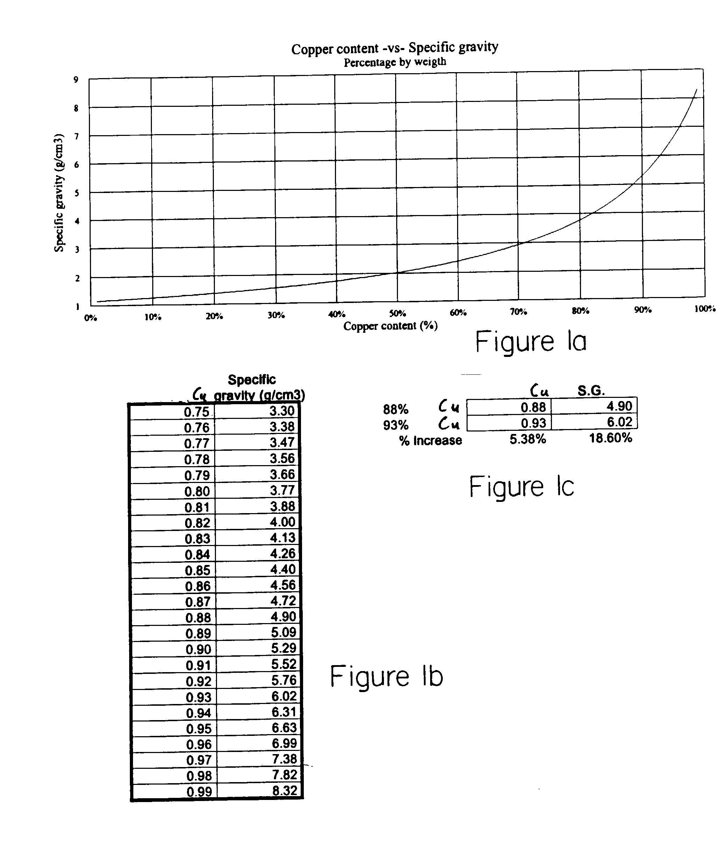

From the annexed figures 1a, 1b and 1c, a sharp increase in specific gravity as the copper content increases may be seen. This is a typical behaviour when increasing the filler content in a metal polymer composite. Up to 60%, the specific gravity increase is close to linear; then, it starts increasing exponentially. For example, between 88% and 93% of copper loading (a 5.4% increase), a 18.6% specific gravity increase is obtained.

In order to get the density up to 5.7 g/cm³ using cooper only, it is essential to select the right particle geometry for the copper and the polymer allowing a minimum fluidity during injection molding and to use a unique particle size distribution of the copper and resin matrix.

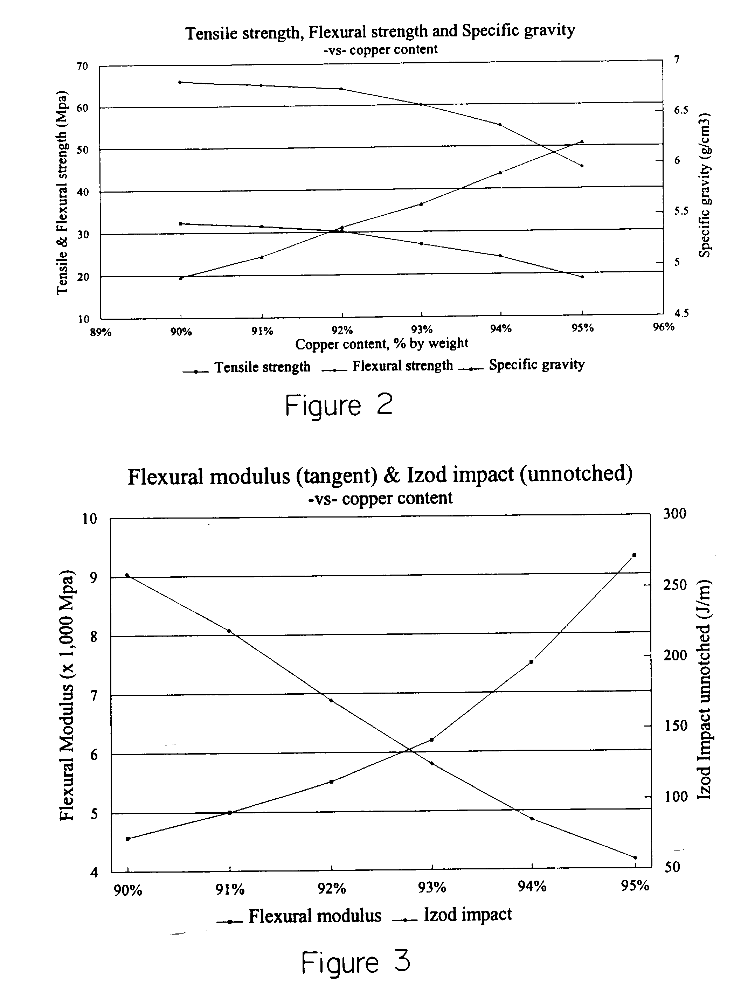

Figures 2 and 3 show a sharp decrease in elongation and Izod impact as the copper content increases. This also emphasises the need for a thoroughly controlled compounding process.

Compounding up to a 88% copper content by weight can be made by standard processes. Higher than 90%, a special technique is required.

Injection molding of mixtures of fine metal powders and plastic resins, or binders, combines the strength and durability of metal with the design versatility of plastic injection molding. It is finding a place in metal parts with intricate geometrics that would cost many times more to produce by machining, die casting, etc.

The high requirement of dimensional tolerances after molding prohibits the use of cheap and low grade thermoplastic resins, such as polyethylene, polypropylene and others. The low shrink factor, thermal stability and the available powder form grade are some of the major points which favor the choice of nylon 11 for the resin matrix function.

The processing of "filled" plastics has been the state of the art in injection moulding for many years. When the plastic or polymer is highly filled with finely divided metals, it provides qualities not usually found in the plastic product. The expression "composite" is now generally used to describe the union of two or more diverse materials to attain synergistic or superior qualities to those exhibited by the individual members. In this particular case, the appellation "metal polymer composite" is representative of a unique combination of metals and polymers used to achieve improved quality of the product.

It relates to the technology of mixing finely divided metals in powder forms into plastics or polymers, such as thermoplastics and thermoset resins.

The particular frangible material of the present invention can be classified as a metal polymer composite due to its composition which includes:
- a metal filler: ultra fine copper powder;
- a binder: thermoplastic polymer resin; and
- a wetting agent or lubricant: calcium and zinc stearate, molybdenum disulphide, organo zirconate.

Once selected, these components are mixed, homogenized and made up in granules in accordance with the following steps:
a) raw materials are pre-weighed according to the determined final mix;
b) then, there is dry blending or tumbling of dry metal powders, polymer particles and additives;
c) a thermal blending or combination of solid particles is prepared with the use of equipment which will mix together different materials into a uniform single homogeneous mass;
d) a screw extruder is used to optimize the quality of the extruded composite mass. Temperature are attained to melt the polymer, adhesively bonding it to the solid metallic particles. A conventional twin-screw extruder is preferably used to extrude the compound. The output passes through a dicing chopper, or pelletizer, which delivers the material in a form suitable for feeding the hoppers of injection molding machines;
e) the finely divided composite of metal and polymer which has been prepared by thermal extrusion blending is then classified in particle size according a specific pattern.

To achieve the injection molding of the projectiles, the frangible compound must have the following characteristics:
- enough fluidity to be handled through the injection screw and barrel of the injection machine without creating any solidification before molding;
- uniform particle distribution in the compound to generate a consistent projectile weight within the established tolerances and an uniform frangibility;
- adequate homogeneity of the compound to obtain uniform mechanical properties after molding;
- uniformity of density of the compound to minimize porosity and localized weakness points;
- lowest shrink factor to respect the dimensional tolerance;
- good granulometry dispersion to minimize separation of the compound during handling at the injection molding step;
- low water absorption of the compound to allow dimensional stability during storage period of the molded parts;
- good lubricity of the molded dart to facilitate demolding and minimum friction in the gun barrel during firing;
- a minimum melt index value required to be sure of the moldability of the compound inside an extrusion and injection machine.

Nylon 11 and nylon 12 are preferred because they have the lowest moisture retention characteristics of the polymer family. The morphology of nylon 11 and nylon 12 can be described by two phases: an amorphous phase and a crystalline phase where the crystallinity is in the order of 20%.

In practice, the semi-crystallinity nature of nylon 11 is characterized by its heat of fusion (11 calories/gram), its melting point (185°C), its high crystallization rate and its low water absorption to saturation which,
- at 20°C and 65% relative humidity, is 0.9 to 1.1%;
- at 20°C and 100% (RH), is 1.6 to 1.9%; and
- at 100°C and 100% (RH), is 2.4 to 3.0%.

One selected grade for the frangible application is the nylon 11 from ATOCHEM FRANCE: NAT ES having a size particle (0-80 µm).

In general, nylon 11 and nylon 12 are linear and semi-crystalline thermoplastics. Nylon 11 is derived from castor oil and nylon 12 comes from butadiene. Because of differences in crystal structure caused through amide group, nylon 12 has a slightly lower melting point and density. Nylon 11 performs better at higher temperature and, in addition, has superior UV resistance. Both materials are not so sensitive to changes in humidity as other polyamides. Nylon 11 has a higher heat distortion and a better low temperature impact resistance. Compared to nylon 6, nylon 66 and nylon 610 (disclosed in the above-noted PCT application), nylon 11 and nylon 12 have a low melting point, low density, low shrink and, by far, the lowest moisture regain.

Copper is selected for the following characteristics: density: 8.8 - 8.95; lead free; ductibility; good adherence to polymer; non abrasive; cost efficiency. The selected grade is directly related to the particle geometry which has been determined to be spheroidal to allow high loading in thermoplastic resin and permit extrusion and injection molding. Spheroidal is meant to designate copper particles which are not perfectly spherical. Satisfactory results have been obtained with particles having a form factor between 1 and 1.2 (which is the ratio of the longest diameter to the shortest diameter).

As examples, two different grades of copper have been used:
- US bronze C118 which is classified as a spherical powder 99.2% copper with a nominal mesh of less than 200;
- Alcan 155 which is a spherical powder 99.0% copper with the following particle size distribution:
- 10% of particles finer than 11µm;
- 50% of particles finer than 22µm; and
- 90% of particles finer than 44µm.

A wetting agent or coupling agent may be used to facilitate a most uniform liaison between copper particles and improve the flexibility of the composite mix. An organo-zirconate from Kenrich Petrochemical (KRN2 44) has been used and shown good results.

Many polymers are susceptible to oxydation which causes either a reduction in chain length and molecular weight (chain scission) leading to a loss of stiffness strength and embrittlement. Oxydation can be slowed down at moderate processing temperatures and its effects are then associated with ageing or quite fast at high processing temperatures and its effects are then associated with thermal stability. Antioxydant represents one type of additive which contribute to the control of oxydation in frangible compound. A primary oxydant which may be used in the present invention is of the type "hindered phenolic". A secondary antioxydant engaged in a synergistic action with the primary oxydant is an organophosphite. The judicious combination of these two additives is a must to assure thermo-oxydative protection to the nylon during processing and after processing (long term protection).

When thermoplastic polymers, such as nylon, come in intimate contact with metallic filler as copper powder, the interaction between them in presence of oxygen can lead to polymer degradation. Copper metal is easily oxydized and the presence of metal ions can act as a catalyst on the thermal oxydation of polymer, even in presence of hindered phenolic antioxydant. Much more efficient inhibition will be achieved by using a metal deactivator together with antioxydants. As a consequence, a metal deactivator/antioxydant should be selected for the frangible ammunition due to the fact that copper is in direct contact with nylon resin. It is classified as a diacylhydrazine resulting from a molecular combination of sterically hindered phenols and metal complexing group.

The injection molding of very highly-filled thermoplastics raise the problem of reduction of mechanical properties or resistance in the molded product. In this particular case, the degree of liaison is at its lowest between the polymer matrix and the filler, and to compensate, some additives are required to reestablish the minimum mechanical properties needed for the application. One efficient thermoplastic elastomer making super tough polyamide or nylon polymer is of the olefinic type. Linear elastomeric molecules or crosslinked very small elastomeric particles, most frequently ethylene-propylene are blended with a compatible thermoplastic, most commonly polypropylene in ratio that determines the stiffness of the resulting elastomer. This class is often referred to as the olefinic thermoplastic elastomer.

The compounding of frangible compound copper-nylon involves a molten-polymer-hot metal interface. It is often desirable to reduce the tendency of molten polymers to stick to hot metal surface during processing (roll mills, extrusion). Additives added to the polymer for this purpose are often referred to as external lubricant and their role is clearly different from that of internal lubricants which primarily affect the viscous flow of the polymer. With the present invention, an aluminium salt of aliphatic monocarboxylic acids (or aluminium stearate) has been selected due to its added function as wetting agent. Acting as external and internal lubricant, this aluminium stearate additive is of great efficiency in the frangible compound with its high melting point and its chemical compatibility with copper.

Light in itself would not do much direct harm to polymers but the radiations, in particular ultraviolet (UV) radiations, tend to initiate or catalyse chemical degradation such as oxydation in a process often globally referred to as "photooxydation". The reduction of the photooxydation can be done with suitable additives often distinguish between UV absorbers which reduces the essential factor of the degradation and light stabilizers which control its progress. With the present frangible ammunition, where the nylon is processed at high temperature, a UV absorber based on benzotriazole has been selected in combination an oligomeric light stabilizer belonging to the class of sterically hindered amine to achieve a synergistic effect. These two additives have extreme low volatility and high thermal stability making them ideal for processing with this nylon resin compound.

It is wished that the present description should not be limited in interpretation except by the terms of the following claims.

## Claims

1. A frangible practice ammunition consisting essentially of a compacted mixture of fine copper powder and of a thermoplastic resin selected from the group consisting of nylon 11 and nylon 12; said copper powder being from 92 % to 95 % by weight of the mixture, said mixture having a minimum specific gravity of 5.7.

2. A frangible practice ammunition as defined in claim 1, wherein said mixture is an injection molded compacted material.

3. A frangible practice ammunition as defined in claim 1, wherein said copper powder consists of particles having a spheroidal shape.

4. A frangible practice ammunition as defined in claim 3, wherein a major portion of said particles have a size finer than 44 µm.

5. A frangible practice ammunition as defined in claim 1, wherein said resin is in the shape of fine powder having a size of less than 80 µm.

6. A frangible practice ammunition as defined in claim 1, wherein said fine copper powder is about 92.5 - 93.5% by weight.

7. A frangible practice ammunition as defined in claim 6, wherein said thermoplastic resin is about 6.5 - 7.5% by weight.

8. A frangible practice ammunition as defined in claim 1, further comprising a lubricant.

9. A frangible practice ammunition as defined in claim 1, further comprising a wetting agent.

10. A frangible practice ammunition as defined in claim 1, wherein said mixture has a weight of up to 36 grains or 2,33 g for a 5.56 mm calibre.

11. A frangible practice ammunition as defined in claim 1, wherein said mixture has a weight of up to 85 grains or 5,5 g for a 9 mm calibre.

12. A method of manufacturing a frangible practice ammunition according to claim 1, comprising the steps of:
(a) dry blending or tumbling a mix of solid particles of raw materials consisting of from 92 to 95% wt of ultra-fine copper powder, nylon 11 or 12 and a wetting agent or lubricant,
(b) thermally blending said solid particles into a uniform homogeneous mass,
(c) screw extruding said mass at temperatures sufficient to adhesively bonding the nylon to the solid copper particles to form a composite,
(d) finely dividing the composite and classifying in particle size according to a predetermined pattern, and
(e) injection molding the classified particles into bullets.

## Patentansprüche

1. Zerbrechende Übungsmunition, bestehend im wesentlichen aus einer verdichteten Mischung von feinem Kupferstaub und einem aus der aus Nylon 11 und Nylon 12 bestehenden Gruppe ausgewählten thermoplastischen Harz, wobei der besagte Kupferstaub 92 bis 95 Gew.-% der Mischung ausmacht, wobei die besagte Mischung mindestens ein spezifisches Gewicht von 5,7 besitzt.

2. Zerbrechende Übungsmunition nach Anspruch 1, bei welcher die besagte Mischung ein spritzgegossenes verdichtetes Material ist.

3. Zerbrechende Übungsmunition nach Anspruch 1, bei welcher der besagte Kupferstaub aus Teilchen mit einer rundlichen Form besteht.

4. Zerbrechende Übungsmunition nach Anspruch 3, bei welcher ein Großteil der besagten Teilchen eine Größe besitzt, die kleiner als 44 µm ist.

5. Zerbrechende Übungsmunition nach Anspruch 1, bei welcher das besagte Harz in Form eines feinen Pulvers mit einer Größe von weniger als 80 µm vorliegt.

6. Zerbrechende Übungsmunition nach Anspruch 1, bei welcher der besagte feine Kupferstaub etwa 92,5 - 93,5 Gew.-% ausmacht.

7. Zerbrechende Übungsmunition nach Anspruch 6, bei welcher das besagte thermoplastische Harz etwa 6,5 - 7,5 Gew.-% ausmacht.

8. Zerbrechende Übungsmunition nach Anspruch 1, weiter umfassend ein Schmiermittel.

9. Zerbrechende Übungsmunition nach Anspruch 1, weiter umfassend ein Netzmittel.

10. Zerbrechende Übungsmunition nach Anspruch 1, bei welcher die besagte Mischung für ein Kaliber 5,56 mm ein Gewicht von bis zu 36 Grain oder 2,33 g aufweist.

11. Zerbrechende Übungsmunition nach Anspruch 1, bei welcher die besagte Mischung für ein Kaliber 9 mm ein Gewicht von bis zu 85 Grain oder 5,5 g aufweist.

12. Verfahren zur Herstellung einer zerbrechenden Übungsmunition nach Anspruch 1, umfassend die Schritte:
(a) Trockenmischen oder Trommeln eines Gemischs von festen Teilchen aus Rohmaterialien, die aus 92 bis 95 Gew.-% ultrafeinem Kupferstaub, Nylon 11 oder 12 und einem Netzmittel oder Schmiermittel bestehen,
(b) thermisches Mischen der besagten festen Teilchen zu einer gleichförmigen homogenen Masse,
(c) Schneckenextrudieren der besagten Masse bei Temperaturen, die ausreichen, um das Nylon mit den festen Kupferteilchen zu verbinden, um einen Verbundwerkstoff zu bilden,
(d) feines Zerteilen des Verbundwerkstoffs und Klassieren in Teilchengröße gemäß einem vorbestimmten Muster, und
(e) Spritzgießen der klassierten Teilchen in Geschosse.

## Revendications

1. Munition fragile d'exercice consistant essentiellement d'un mélange compacté de poudre de cuivre fine et d'une résine thermoplastique choisie dans le groupe constitué du nylon 11 et du nylon 12 ; la poudre de cuivre constituant de 92 % à 95 % en poids du mélange, ce mélange ayant une masse volumique minimum de 5,7.

2. Munition fragile d'exercice selon la revendication 1, dans laquelle le mélange est un matériau compacté moulé par injection.

3. Munition fragile d'exercice selon la revendication 1, dans laquelle la poudre de cuivre consiste en particules sphéroïdales.

4. Munition fragile d'exercice selon la revendication 3, dans laquelle la majorité des particules a une granulométrie inférieure à 44 µm.

5. Munition fragile d'exercice selon la revendication 1, dans laquelle la résine est sous forme de poudre fine d'une granulométrie inférieure à 80 µm.

6. Munition fragile d'exercice selon la revendication 1, dans laquelle la poudre de cuivre fine représente environ 92,5 - 93,5 % en poids.

7. Munition fragile d'exercice selon la revendication 6, dans laquelle la résine thermoplastique représente environ 6,5 - 7,5 % en poids.

8. Munition fragile d'exercice selon la revendication 1, comprenant de plus un lubrifiant.

9. Munition fragile d'exercice selon la revendication 1, comprenant de plus un agent mouillant.

10. Munition fragile d'exercice selon la revendication 1, dans laquelle le mélange a un poids jusqu'à 36 grains ou 2,33 g pour un calibre de 5,56 mm.

11. Munition fragile d'exercice selon la revendication 1, dans laquelle le mélange a un poids jusqu'à 85 grains ou 5,5 g pour un calibre de 9 mm.

12. Procédé pour la fabrication d'une munition fragile d'exercice selon la revendication 1, comprenant les étapes consistant à :
(a) mélanger à sec ou passer au tambour tubulaire un mélange de particules solides de matière première consistant en 92 à 95 % en poids de poudre de cuivre ultrafine, de nylon 11 ou 12 et d'un agent mouillant ou un lubrifiant,
(b) mélanger thermiquement les particules solides pour former une masse homogène uniforme,
(c) extruder à la vis la masse à des températures suffisantes pour assurer le collage adhésif du nylon sur les particules de cuivre solides pour former un composite,
(d) diviser finement le composite et trier en granulométrie selon un modèle prédéterminé, et
(e) mouler par injection les particules triées pour former une munition.
